# EUROPEAN PATENT APPLICATION

(11) **EP 4 628 529 A1**
(43) Date of publication of application: **08.10.2025**
(21) Application number: 25155553.8
(22) Date of filing: 03.02.2025
(51) Int. Cl.: C08L 7/00, C08J 3/22, B60C 1/00

(54) **RUBBER COMPOSITION BASED ON MULTIPHASE DILUTION OF COMPOSITE BLEND**

(30) Priority: 07.02.2024 US 202418435370
(71) Applicant: The Goodyear Tire & Rubber Company, Akron, OH 44316 (US)
(72) Inventor: Schmidt, Ryan Michael, Wadsworth, 44281 (US)
(74) Representative: Kutsch, Bernd

(57) **Abstract**

A method of forming a vulcanizable rubber composition for use in a tire tread is disclosed. The method includes a sequence of non-productive mixing steps. In a first of the non-productive mixing steps, a composite blend is mixed with a first elastomer to generate a first mixture. The composite blend includes a second elastomer, which may be the same as, or different from, the first elastomer, and carbon black. In a second of the non-productive mixing steps, a third elastomer, different from the first elastomer, is mixed with the first mixture, or with a mixture generated from the first mixture, to generate a second mixture. In a productive mixing step, a curing agent is mixed with the second mixture, or with a mixture generated from the second mixture, to generate the vulcanizable rubber composition, which includes the first, second, and third elastomers, carbon black from the composite blend, and an additional amount of a reinforcing filler.

## Description

### FIELD OF THE INVENTION

Described herein is a method of forming a rubber composition suitable for forming a component of a pneumatic tire, such as a tire tread. The method finds particular application in forming a multiphase rubber composition in which one or more fillers are partitioned differently between phases of the rubber composition.

### BACKGROUND OF THE INVENTION

Rubber compositions suited to use in tires often include a mixture of elastomers, together with reinforcing fillers, such as carbon black and silica. To form the rubber composition, the elastomers are combined in a first non-productive stage, generally together with some of the ingredients of the rubber composition, such as fillers. Additional ingredients may be introduced and mixed with the elastomers in one or more additional non-productive stages. In a subsequent productive phase, a curing agent, such as sulfur, is added to the mixture. The introduction of the elastomers in the first non-productive stage results in an uncured rubber composition, or masterbatch, containing a homogeneous polymer matrix in which the other ingredients are uniformly dispersed.

In some cases, the elastomers include a mixture of polydiene rubbers, such as a mixture of polybutadiene rubber and a styrene-butadiene rubber, or two different styrene-butadiene rubbers. For example, U.S. Pub. No. 20120077902 A1 describes a tread composition including two specific styrene-butadiene rubbers and a specific cis-1,4 polybutadiene. U.S. Pub. No. 20210032442 A1 describes a tread composition including a specific solution polymerized styrene-butadiene rubber, a natural rubber or synthetic polyisoprene, and optionally a specific cis-1,4 polybutadiene. U.S. Pub. No. 20200071506 A1 describes a tread including specific first and second functionalized solution polymerized styrene-butadiene rubbers and optionally a polyisoprene having a cis 1,4 content greater than 95%.

Recently, preformed elastomeric composite blends, sometimes referred to as a "masterbatches" have been developed for use in tire compositions. These typically contain natural rubber latex, generally of high purity, and carbon black, as described, for example, in U.S. Pub. Nos. 20120172492 A1 and 20190040225 A1. The composite blend is formed by combining liquid latex with an aqueous dispersion of carbon black, resulting in a well-dispersed, coagulated mixture. The mixture can be dried to remove water, thereby forming a solid, which may be in the form of a sheet, fibers, or granules. Such composite blends can be diluted with additional natural rubber and compounded with a curing agent and other additives to yield a composition suited to forming a tire tread, as described, for example, in U.S. Application Ser. No. 18/127,763, filed on March 29, 2023.

There remains a need for rubber compositions which can utilize such composite blends to provide rubber compositions which can provide improved or different properties, such as improvements in heat build-up, tear performance, abrasion and wear.

### SUMMARY OF THE INVENTION

The invention relates to a rubber composition in accordance with claim 1, to a rubber composition in accordance with claim 11, to a tire tread in accordance with claim 14, and to a tire in accordance with claim 15.

Dependent claims refer to preferred embodiments of the invention.

In accordance with one embodiment, a method of forming a vulcanizable rubber composition includes, in a first non-productive mixing step, mixing a composite blend with a first elastomer to generate a first mixture. The composite blend includes a second elastomer and carbon black. The second elastomer is the same as, or different from, the first elastomer. In a second non-productive mixing step, a third elastomer, different from the first elastomer, is mixed with the first mixture, or with a mixture generated from the first mixture, to generate a second mixture. In a productive mixing step, a curing agent is mixed with the second mixture, or with a mixture generated from the second mixture, to generate the vulcanizable rubber composition, which includes the first, second, and third elastomers, carbon black from the composite blend, and an additional amount of a reinforcing filler.

In various aspects of the method, singly or combined:
The first elastomer may be or include a first one of a natural rubber and a polydiene elastomer and the third elastomer may be or include a second one of the natural rubber and the polydiene elastomer. The first elastomer may be or include the natural rubber and the third elastomer may be or include the polydiene elastomer.

The polydiene elastomer may include a styrene-butadiene rubber. The styrene-butadiene rubber may be or include an emulsion-polymerized styrene-butadiene rubber.

A ratio by weight of the first elastomer to the third elastomer in the vulcanizable rubber composition may be at least 1:10, or at least 1:5, or at least 1:2, or at least 1:1.5, or at least 1:1, or up to 10:1, or up to 5:1, or up to 3:1, or up to 2:1, or up to 1.5:1.

The first and third elastomers may be present in the vulcanizable rubber composition in a total amount of at least 20 phr, or at least 30 phr, or up to 70 phr, or up to 60 phr, or up to 50 phr, or up to 40 phr.

The second elastomer may be or include a natural rubber.

The composite blend may include carbon black in an amount of at least 40 phr per 100 phr of the second elastomer.

The reinforcing filler may include carbon black in an amount of at least 10 phr, or at least 20 phr per 100 phr of the second elastomer. The reinforcing filler may further include silica in an amount of at least 5 phr.

The vulcanizable rubber composition may further include at least one of a processing aid, a cure activator, and a cure accelerator.

A tire tread may be formed from a vulcanizable rubber composition formed by the method described above. A tire may include the tread.

In accordance with another embodiment, a vulcanizable rubber composition includes 100 phr of elastomers, the elastomers including at least 5 phr of a first elastomer, at least 20 phr of a second elastomer, provided in the form of a composite blend with carbon black, and at least 5 phr of a third elastomer, the third elastomer being different from the first elastomer in its chemical composition. The vulcanizable rubber composition further includes at least 5 phr of a particulate filler, in addition to the carbon black in the composite blend. The particulate filler is selected from the group consisting of carbon black, silica, and combinations thereof. The vulcanizable rubber composition further includes a cure activator, a cure accelerator, and a sulfur-based curing agent.

In one aspect, the vulcanizable rubber composition includes multiple phases, including a first phase including the first elastomer, a second phase including the second elastomer, and a third phase including the third elastomer, wherein a concentration of carbon black in the third phase is lower than in the first phase.

The vulcanizable rubber composition may further include a processing aid selected from the group consisting of a resin, a liquid processing aid, a wax, and combinations thereof.

A tire tread may be formed from the vulcanizable rubber composition described above. A pneumatic tire may include the tread.

In accordance with another embodiment, a method of forming a vulcanizable rubber composition includes, in a first non-productive mixing step, mixing together a composite blend, a natural rubber and carbon black, to generate a first mixture, the composite blend including natural rubber and carbon black. In a second non-productive mixing step, a styrene-butadiene rubber is mixed with the first mixture, or with a mixture derived from the first mixture, to generate a second mixture including 100 phr of elastomers, the elastomers including at least 45 phr of natural rubber and at least 10 phr of styrene-butadiene rubber, the second mixture further including at least 40 phr carbon black and at least 5 phr of silica. In a productive mixing step, a curing agent is mixed with the second mixture or with a mixture generated from the second mixture, to generate the vulcanizable rubber composition.

### BRIEF DESCRIPTION OF THE DRAWING

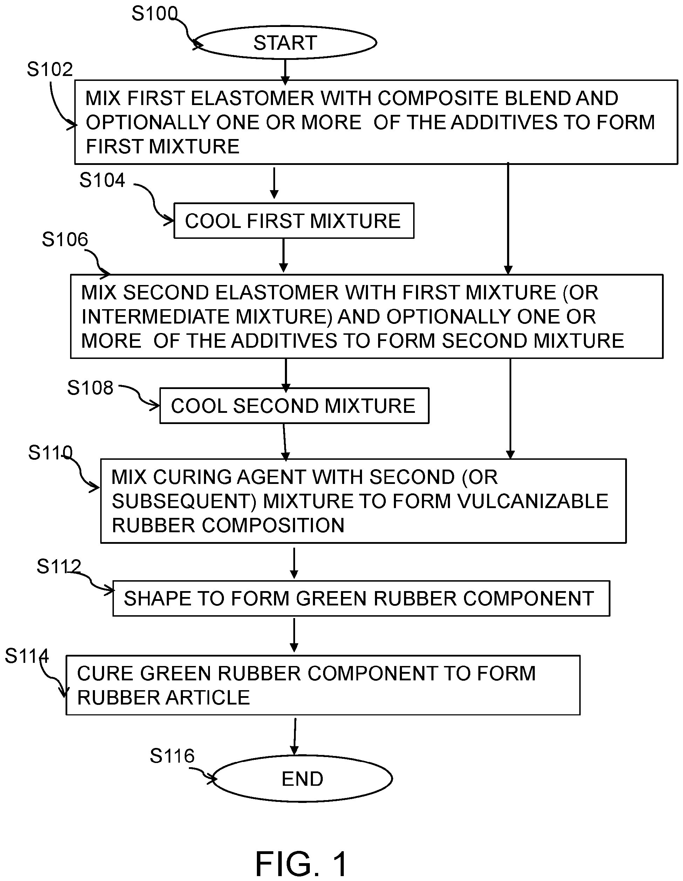

FIGURE 1 is a flowchart illustrating a method of making a vulcanizable rubber composition and an article formed therefrom.

### DETAILED DESCRIPTION OF PREFERRED EMBODIMENTS

A method for forming a rubber composition is described which includes introducing elastomers in different stages of the mixing process, thereby forming a multiphase vulcanizable rubber composition.

The rubber composition formed in the method is a mixture of elastomers and additives suitable for forming a cured article, such as a tire or part thereof, e.g., a tire tread. The elastomers include a first elastomer, such as a polyisoprene, e.g., a natural rubber and/or synthetic rubber, a second elastomer, such as a polyisoprene, e.g., a natural rubber and/or synthetic rubber, and a third elastomer, different from the first elastomer, such as a polydiene, e.g., a styrene-butadiene rubber (SBR). In one embodiment, the first elastomer is natural rubber and the third elastomer is a styrene-butadiene rubber.

The second elastomer, such as a polyisoprene, e.g., natural rubber, is provided in the form of a composite blend. The composite blend provides at least a first part of the carbon black in the rubber composition, with an optional second part of the carbon black being provided separately.

Other additives which may be incorporated into the vulcanizable rubber composition include one or more of: other reinforcing fillers such as silica, liquid processing aids, resins, cure activators, cure accelerators, a sulfur-based curing agent, antidegradants, and combinations thereof.

As a preferred embodiment, a vulcanizable rubber composition is derived from:
A) 100 phr of elastomers, the elastomers including:
   (i) at least 5 phr of a first elastomer,
   (ii) at least 20 phr of a second elastomer in the form of a composite blend with carbon black, and
   (iii) at least 5 phr of a third elastomer, different from the first elastomer in its chemical composition;
B) at least 5 phr of a particulate filler, in addition to the carbon black in the composite material, the particulate filler being selected from:
   (i) carbon black,
   (ii) silica, and
      combinations thereof;
C) optionally, one or more processing aids, which may be selected from:
   (i) a resin,
   (ii) a liquid processing aid,
   (iii) a wax, and
      combinations thereof;
D) a cure activator, which may be selected from:
   (i) zinc oxide,
   (ii) a fatty acid, and
      combinations thereof;
E) a cure accelerator;
F) a sulfur-based curing agent; and
G) optionally one or more additional components, such as antiozonants, antioxidants, cure retardants, peptizers, and the like.

In one embodiment, a method of preparing the vulcanizable rubber composition includes a sequence of at least two non-productive mixing stages (NP), i.e., mixing stages occurring before a sulfur-based curing agent is added to the mixture, which are followed by a productive mixing stage (PR), in which the sulfur-based curing agent is added to the mixture. The non-productive mixing stages may include at least a first non-productive mixing stage (NP1) and a second, subsequent non-productive mixing stage (NP2). Additional non-productive mixing stages, before or after NP2, may optionally be performed. In the first non-productive mixing stage, the composite blend is mixed with the first elastomer, which may be one of polyisoprene and a polydiene elastomer and optionally additional reinforcing filler, such as carbon black. In the second non-productive mixing stage, the mixture formed in NP1 (or in an intermediate NP stage) is mixed with the third elastomer, which is different from the first elastomer and which may be the other of the polyisoprene and the polydiene rubber.

In the resulting vulcanizable rubber composition, carbon black is not equally distributed throughout the three (or more) elastomers, resulting in a multiphase mixture, which yields advantageous properties in an article formed therefrom, such as a tire tread of a pneumatic tire. In particular, the vulcanizable rubber composition may include three phases: a first phase in which carbon black is dispersed in the first elastomer at a first carbon black: elastomer ratio, by weight (CB:E ratio), a second phase in which carbon black is dispersed in the second elastomer at a second CB:E ratio, and a third phase in which carbon black is dispersed in the third elastomer at a third CB:E ratio. In general, the second phase has the highest CB:E ratio and the third phase has the lowest CB:E ratio, particularly when little or no carbon black is added in NP2. As will be appreciated, the three phases are partially intermixed, but are sufficiently distinct to provide the rubber composition, and articles formed therefrom, with unique physical properties, providing a good blend of properties indicative of tear resistance, abrasion, and heat build-up in a tire.

### Definitions

The terms "rubber" and "elastomer" may be used interchangeably, unless otherwise indicated. The terms "rubber composition" or "compounded rubber" are used interchangeably to refer to "rubber which has been blended or mixed with various ingredients and materials" and such terms are well known to those having skill in the rubber mixing or rubber compounding art. The terms "cure" and "vulcanize" may be used interchangeably unless otherwise indicated.

As used herein, the term "tread," refers to both the portion of a tire that comes into contact with the road under normal inflation and load and optionally also any subtread, unless otherwise indicated.

As used herein, the term "phr" means parts per one hundred parts rubber by weight. In general, using this convention, a rubber composition includes 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. The term "phf" means parts per one hundred parts by weight of fillers in the rubber composition.

Unless otherwise noted, the following methods are used for determining properties:
Molecular weights of elastomers, rubber compositions, and resins, such as Mn (number average molecular weight), Mw (weight average molecular weight) and Mz (z average molecular weight), are determined herein using gel permeation chromatography (GPC) according to ASTM D5296-19, "Standard Test Method for Molecular Weight Averages and Molecular Weight Distribution of Polystyrene by High Performance Size-Exclusion Chromatography," using polystyrene calibration standards.

The glass transition temperature (Tg) of an elastomer or elastomer composition is the glass transition temperature(s) of the respective elastomer or elastomer composition in its uncured state or possibly a cured state in a case of an elastomer composition.

Tg values of elastomers are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry," hereinafter ASTM D3418.

The glass transition temperature Tg for a resin is determined as a peak midpoint by a differential scanning calorimeter (DSC) at a temperature rate of increase of 10 °C per minute, according to ASTM D6604-00 (2017), "Standard Practice for Glass Transition Temperatures of Hydrocarbon Resins by Differential Scanning Calorimetry," hereinafter ASTM D6604.

The glass transition temperature Tg for an oil is determined as a peak midpoint by a differential scanning calorimeter (DSC) at a temperature rate of increase of 10 °C per minute, according to ASTM E1356-08 (2014), "Standard Test Method for Assignment of the Glass Transition Temperatures by Differential Scanning Calorimeter."

The softening point of a resin is determined according to ASTM E28-18, "Standard Test Methods for Softening Point of Resins Derived from Pine Chemicals and Hydrocarbons, by Ring-and-Ball Apparatus," hereinafter, ASTM E28, which is sometimes referred to as a ring and ball softening point.

Mooney viscosity (ML 1+4) is measured in M.U. at 100 °C according to ASTM D1646-19a, "Standard Test Methods for Rubber-Viscosity, Stress Relaxation, and Pre-Vulcanization Characteristics (Mooney Viscometer)," hereinafter, ASTM D1646.

The term "alkyl" refers to linear, branched and cycloalkyl groups. The term "aryl" refers to groups including at least one aromatic ring and encompasses alkylaryl groups.

Cis, trans, and vinyl contents (%) of polymers refer to the molar proportions of the 1,4-cis, 1-4-trans, and 1-2-vinyl butadiene units of the polymer, unless otherwise expressed, and generally total 100%. These percentages can be determined by 1H-NMR spectrometry, according to ISO 21561-1:2015. Styrene content refers to the wt.% of bound styrene in a polymer, such as a styrene-butadiene polymer, and can be determined by FT-IR.

### An Exemplary Method

The vulcanizable rubber composition may be prepared by mixing the vulcanizable elastomers, fillers, such as carbon black, and other rubber compounding ingredients, not including the curing agent, in a sequence of mixing stages with at least one mechanical mixer, usually referred to as "non-productive" mixing stages, to an elevated temperature under high shear rubber mixing conditions, followed by a final "productive" mixing stage, in the sulfur-based curing agent and cure accelerators are added to the mixture and mixed at a lower mixing temperature to avoid unnecessarily pre-curing the rubber mixture during the productive mixing stage.

FIGURE 1 illustrates an exemplary method of forming the vulcanizable rubber composition. The method begins at S100.

At S102, in a first non-productive mixing stage (NP1), the first elastomer is combined with the composite blend (containing the second elastomer) and optionally a first portion of the additives (excluding the curing agent(s)) and mixed in a suitable mixing device for a period of time, such as at least one minute, to form a first mixture.

At S104, following the first non-productive mixing stage, the first mixture may be dropped from the mixing device or otherwise cooled.

At S106, in a second non-productive mixing stage (NP2) the third elastomer to be incorporated into the rubber composition is combined with the first mixture from S102 or S104, or an intermediate mixture derived therefrom, and optionally with a second portion of the additives (excluding the curing agent(s)) and mixed in a suitable mixing device for a period of time, such as at least one minute. The output of this step is a second mixture, which includes the first, second, and third elastomers and at least some of the additives (other than the curing agent(s)).

At S108, following the second non-productive mixing stage, the mixture may be dropped from the mixing device or otherwise cooled.

Optionally, one or more additional non-productive mixing stages may be performed prior to the productive mixing stage.

At S110, in a productive mixing stage, the curing agent is combined with the mixture output at S106 or S108 (or a subsequent non-productive mixing stage if performed) and mixed for a suitable time, such as at least one minute. The output of this step is a vulcanizable rubber composition, which includes the first, second, and third elastomers, additives, and curing agent.

At S112, the vulcanizable rubber composition formed at S110 may be extruded, molded, and/or otherwise shaped to form a green rubber component, such as a tire tread or portion thereof.

At S114, the green rubber component, optionally together with other components of an article, such as a tire, may be cured, e.g., by heating.

The method ends at S116.

As will be appreciated, fewer, additional and/or different steps to those described above may be performed in the method.

In NP1 (S102) the first elastomer may be mixed with the composite blend, additional carbon black, silica, and some or all of the additives (excluding the curing agent) to form the first mixture. The mixing may be performed for 1-2 minutes to a temperature of 130°C to 200°C, e.g., 150°C to 165 °C. This step may be performed in the absence of the third elastomer, or in the presence of a minor amount of the third elastomer, such as no more than 10 wt.%, or no more than 5 wt.% of the third elastomer.

After cooling the first mixture (S104), it is combined with the third elastomer (S106) and any additives that have not yet been added and mixed to form the second mixture. The mixing may be performed for 2 minutes to a temperature of 130°C to 200°C, e.g., 150°C to 165 °C. In one embodiment, incorporation of the carbon black (and optionally also the silica) is performed prior to the second mixing step, i.e., before all or a major amount (at least 90 wt.%, or at least 95 wt.%) of the third elastomer is added. As a result, more of the carbon black remains dispersed in the first and second elastomers than in the third elastomer.

After cooling the second mixture (S108), a further one or more non-productive mixing steps (designated NP3, etc.) may be performed to generate a third mixture, etc., derived from the second mixture. In one embodiment, the third mixing step is performed without adding further ingredients. The mixing in NP3, etc., may be performed for 2 minutes to a temperature of 130°C to 200°C, e.g., 150°C to 165 °C, followed by a cooling step.

In the productive mixing stage (S110) the second mixture (or a third, etc., mixture derived therefrom, as described above) is combined with the curing agent. The productive mixing step may be conducted at a temperature below the vulcanization (cure) temperature and/or for a short time, in order to avoid unwanted pre-cure of the rubber composition, e.g., no more than 120°C, such as at least 60°C, e.g., for 2 minutes at a temperature of 110-115°C. Mixing may be performed, for example, by kneading the ingredients together in a Banbury mixer or on a milled roll.

The rubber composition may be cooled to a temperature below 40 °C between each of the mixing stages. For example, the rubber composition may be dumped from the mixer after each mixing step, sheeted out from an open mill or onto a roller die, and allowed to cool to below 40°C after each mixing step.

When the curing agent (and any of the cure accelerators and other ingredients not previously added to the mixture) added in the productive mixing step is/are thoroughly mixed into the rubber composition, the rubber composition may be molded or otherwise formed into the shape of a green component of a tire, such as a tire tread (S112).

At S114, the temperature of the green component may be raised to effect cure. Curing of the pneumatic tire or a part thereof may be carried out at a temperature of from 120°C to 200°C, e.g., at least 140°C, or up to 180°C, or 150°C, for at least 10 minutes. Any of the usual vulcanization processes may be used, such as heating in a press or mold, or heating with superheated steam or hot air. Such tires can be built, shaped, molded and cured by various methods which are known and will be readily apparent to those having skill in such art.

Further details of the rubber composition will now be described.

### A. The Elastomers

For ease of description, the first elastomer will be described in terms of a polyisoprene rubber and the third elastomer in terms of a polydiene rubber, with the understanding that this can be reversed.

A ratio by weight of the first elastomer to the third elastomer in the vulcanizable rubber composition may be at least 1:10, or at least 1:5, or at least 1:2, or at least 1:1.5, or at least 1:1, or up to 10:1, or up to 5:1, or up to 3:1, or up to 2:1, or up to 1.5:1. In total, the first and third elastomers may be present in the vulcanizable rubber composition in an amount of at least 20 phr, or at least 30 phr, or up to 70 phr, or up to 60 phr, or up to 50 phr, or up to 40 phr.

### (i) The First Elastomer

The first elastomer includes or consists of a natural and/or synthetic polyisoprene, such as natural rubber. The first elastomer may be present in the rubber composition in an amount of at least 5 phr, or at least 10 phr, or at least 15 phr, or up to 70 phr, or up to 60 phr, or up to 40 phr, or up to 30 phr, such as 22±5 phr.

As used herein, the term "natural rubber" means naturally occurring rubber such as can be harvested from sources such as Hevea rubber trees and non-Hevea sources (e.g., guayule shrubs and dandelions such as TKS). In other words, the term "natural rubber" should be construed so as to exclude synthetic polyisoprene.

Synthetic polyisoprene refers to a polymer that is manufactured from isoprene monomers, and should not be construed as including naturally occurring rubber. However, the term polyisoprene should be construed as including polyisoprenes manufactured from natural sources of isoprene monomer.

Natural rubber is primarily cis-polyisoprene. The cis-1,4-polyisoprene content of the natural rubber may be at least 90%, or at least 95%. In one embodiment, the natural rubber is a natural cis-1,4-polyisoprene rubber having a cis-1,4-content of at least 96 % and a Tg in a range of -60°C to -110°C, as determined according to ASTM D3418.

Several forms of natural rubber are commercially available. The natural rubber may meet the ISO TSR 20 Grade specification or the ISO TSR 10 Grade specification for purity. An ISO TSR 20 natural rubber has a maximum ash content of 1 wt. %, as determined according to ISO 247:1990, a maximum volatile matter of 0.8 wt. %, as determined according to ISO 248:1991, a maximum nitrogen content of 0.6 wt. %, as determined according to ISO 1656:1996, a minimum initial Wallace plasticity of 30, as determined according to ISO 2007:1991, and a minimum plasticity retention index of 40, as determined according to ISO 2930:1995. For TSR 10, a maximum ash content of 0.75 wt. %, a maximum nitrogen of 0.6 wt. %, a maximum volatiles of 0.8 wt. %, a minimum plasticity of 30, and a minimum plasticity retention of 50 are specified. In other embodiments, the natural rubber may be a ribbed smoked sheet (RSS) rubber.

### (ii) The Second Elastomer (Composite blend)

The composite blend includes a mixture of a second elastomer and a particulate filler, such as carbon black. Ingredients of the composite blend other than the second elastomer and particulate filler may be present at no more than 20 phr, or no more than 10 phr, or no more than 5 phr. The composite blend may be free of cure accelerators, cure activators, and curing agents.

A ratio by weight of the second elastomer to the carbon black in the composite blend may be at least 0.5:1, or at least 1:1, or at least 1.5:1, or at least 1.7:1, or up to 10:1, or up to 5:1, or up to 4:1; or up to 3:1, or up to 2.5:1, or up to 2:1. Expressed another way, the carbon black may be at least 10 phr, or at least 20 phr, or at least 30 phr, or at least 40 phr, or at least 50 phr, or up to 90 phr, or up to 70 phr, or up to 60 phr, with respect to 100 phr of the elastomer(s) in the composite blend.

In one embodiment, the second elastomer consists of or includes natural rubber.

The carbon black in the composite blend may be any of the ASTM grades commonly used in forming rubber compositions, as described further below. Illustrative ASTM grades include N134, N220, and N234.

The composite blend may have a storage viscosity (ML(1+4) @ 100°C) of at least 140, or at least 150, or up to 200, or up to 190.

The composite blend is formed by a wet mixing process in which a fluid elastomer latex (e.g., natural rubber) is combined with an aqueous slurry of a particulate filler, such as carbon black and or silica. The composite blend may be formed by a method as described in one or more of U.S. Pat. No. 6,048,923 A and U.S. Pub. Nos. 20020086917 A1 and 20190048150 A1. These references generally disclose wet mixing processes in which separate streams of a carbon black slurry and an elastomer latex are combined at a mixing zone under conditions where the elastomer latex coagulates without the need for added coagulants. In one embodiment, the slurry is fed to the mixing zone as a continuous, high velocity jet of injected fluid, while the natural rubber latex fluid is fed at relatively low velocity, as described, for example, in U.S. Pub. No. 20190048150 A1. The high velocity, flow rate and particulate concentration of the filler slurry are sufficient to cause mixture and high shear of the latex fluid, flow turbulence of the mixture within at least an upstream portion of the mixing zone, and substantially completely coagulate the elastomer latex prior to a discharge end.

The coagulated mixture may be dewatered to 15% to 25% water content. After dewatering, the resulting dewatered coagulum may be dried, e.g., by thermal drying. The dewatered coagulum may be mechanically masticated while drying. For example, the dewatered coagulum may be mechanically worked with one or more of a continuous mixer, an internal mixer, a twin screw extruder, a single screw extruder, or a roll mill. Further drying may be performed to reduce the water content below 1 wt.%, or below 0.5 wt.%, or below 0.2 wt.%. The resulting dry composite blend may be granulated or otherwise comminuted into smaller pieces for easier handling.

Example composite blends are commercially available from Cabot Corporation as E²C^{™} DX9730, E²C^{™} FX9390, E²C^{™} DX9660, E²C^{™} EX9620, E29620, and others.

Methods of making such Engineered Elastomeric Composites (E2C) and their properties are further described, for example, in Ting Wang, et al., "CEC and its application in off-the-road tires," Rubber World, 277(6), pp. 33-38 (2003).

### (iii) The Third Elastomer

In the exemplary embodiment, the third elastomer consists of or includes a synthetic conjugated diene-based elastomer (referred to herein as a polydiene or polydiene elastomer). The third elastomer may be present in the rubber composition in an amount of at least 5 phr, or at least 10 phr, or at least 15 phr, or up to 70 phr, or up to 60 phr, or up to 40 phr, or up to 30 phr, such as 18±5 phr.

The polydiene elastomer includes at least one polydiene elastomer, each of the polydiene elastomers being derived, at least in part, from butadiene. For example, at least 20%, or at least 30% of the units in the polydiene rubber(s) are formed from butadiene. In one embodiment, the polydiene rubber is a copolymer of butadiene and another monomer, such as a vinylarene monomer, e.g., one or more of styrene, α-methylstyrene, divinyl benzene, and vinylpyridine.

Example polydiene elastomers include styrene-butadiene rubber (SBR) and polybutadiene (PBD). The styrene-butadiene rubber may be an emulsion-polymerized styrene-butadiene rubber (ESBR) and/or a solution polymerized styrene-butadiene rubber (SSBR).

In one embodiment the polydiene elastomer(s) includes or consists of an ESBR. The ESBR may have a bound styrene content of from 5 to 50 wt. %, such as 20 to 30 wt. %. In emulsion polymerization, styrene and 1,3-butadiene are copolymerized as an aqueous emulsion. Emulsion polymerization methods are described, for example, in U.S. Pat. No. 5,583,173 A and U.S. Pub. Nos. 20050288393 A1, 20060266454 A1, 20080216935 A1, and 20140171557 A1.

One example ESBR is available as PLIOFLEX 1502^{™} from The Goodyear Tire & Rubber Company. It has a styrene content of 23.5 wt. % and a Tg of -50° C, and is prepared by tin-catalyzed aqueous emulsion polymerization of styrene and 1,3-butadiene monomers.

The ESBR may be oil-extended for ease of processing. One oil-extended ESBR is BUNA^{™} SB 1723-Schkopau, from Dow, which is manufactured by cold polymerization using mixed rosin acid/fatty acid soaps. It is plasticized with 37.5 parts of mineral oil per 100 parts of rubber and has a Mooney viscosity ML1+4 @ 100°C of 49. Another example of an oil-extended ESBR, has a bound styrene content of 40% styrene, a Tg of -33° C, extended with 37.5 phr RAE oil, available as KER^{®}1789 ESBR from Synthos.

In one embodiment the polydiene elastomer(s) includes or consists of an SSBR. The SSBR may have a bound styrene content of from 5 to 50 wt. %, e.g., 9 to 36, wt. %, or 26 to 31 wt. %. The SSBR can be prepared, for example, by anionic polymerization in an inert organic solvent. For example, the SSBR can be synthesized by copolymerizing styrene and 1,3-butadiene monomer in a hydrocarbon solvent utilizing an organo lithium compound as the initiator. Alternatively, the SSBR is tin-coupled. Methods of preparing SSBRs are described, for example, in U.S. Pat. Nos. 4,843,120 A; and 6,103,842 A; and U.S. Pub. Nos. 20020099148 A1; US20120077902 A1; and 20140135437 A1.

One example SSBR is available as SE-SLR^{®} 6430 from Dow.

The SSBR may be oil-extended. The oil-extended SSBR may have a bound styrene content of from 25 to 45 wt.%, a vinyl 1,2 content of from 10 to 60 wt. %, based on the rubber weight, and a Tg of from -40° C to -5° C. One example of an oil-extended SSBR has 40 wt. % bound styrene, 14 wt. % vinyl, a Tg of -34° C, extended with 37.5 phr TDAE oil, which is available as SE SLR6430^{™} SSBR, from Dow Schkopau. Another example of an oil-extended SSBR has 34 wt.% bound styrene, 38 wt. % vinyl, a Tg of -25° C, extended with 37.5 phr SRAE oil, which is available as Tufdene^{™} E680, from Asahi Chemical.

In one embodiment, the first and/or third elastomer may be hydrogenated and/or functionalized. Hydrogenation reduces the percentage of double bonds in the elastomer. Hydrogenation of the polydiene elastomer may be partial or complete. By partial, it is meant that fewer than all of the double bonds present in the polydiene segment(s) of the elastomer are hydrogenated, e.g., with a hydrogenation catalyst. For example, at least 10% or at least 20%, or at least 30%, or at least 40%, or at least 60%, or at least 80% of the double bonds present in the polydiene segment(s) of the elastomer become saturated by the hydrogenation. In some embodiments, up to 100% of the double bonds present in the polydiene segment(s) of the elastomer become saturated by the hydrogenation.

Various functional groups can be incorporated by functionalization, such as alkoxysilane groups, primary amine groups, thiol groups, and combinations thereof. For example, a functionalized SBR may be obtained by copolymerizing styrene and butadiene with a primary amino group and/or thiol group and an alkoxysilyl group which are bonded to the polymer chain. In one embodiment, the alkoxysilyl group is an ethoxysilyl group. For example, the styrene-butadiene rubber is produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure.

Methods of preparing functionalized styrene-butadiene rubbers are disclosed, for example, in U.S. Pub. Nos. 20040249020 A1; 20040254301 A1; and 20080287601 A1. Chain functionalized amino-functionalized SBRs are described, for example, in U.S. Pub. No. 20040122194 A1.

An SBR functionalized with alkoxysilane and amino groups has a bound styrene content of 27% and 1, 2-vinyl content of 57%, a Tg = -27° C, and is available as HPR 355H from JSR. A tin coupled SBR functionalized with an alkoxysilane group and a thiol group, has a Tg of -25° C and is available as Sprintan^{®} SLR 4602 from Trinseo. An SSBR functionalized with alkoxysilane and thiol groups, with a bound styrene content of 15 wt.%, a 1, 2-vinyl content of 30 wt.%, and a Tg of about -60 °C is available as SPRINTAN^{™} SLR 3402 from Trinseo. A hydroxy-functionalized SBR is available as Tufdene 3330^{™} from Asahi. An epoxy-functionalized SBR is available as Tufdene E50^{™} from Asahi. Amino/siloxy-functionalized SBRs are available as SLR4601 ^{™} from Trinseo and T5560^{™} from JSR.

In one embodiment, the elastomer(s) may be both functionalized and hydrogenated. The elastomer to be hydrogenated may be functionalized at the terminal end, as described, for example, in U.S. Pub. Nos. 20230312780 A1; 20230312784 A1; 20230312792 A1; and 20230312798 A1. Functionalization may also be performed intermediate the terminal ends. In another embodiment, the elastomer is functionalized with an alkoxysilane group and optionally at least one functional group selected from the group consisting of primary amines and thiols. For example, a (co)polymer chain of a conjugated diene or a conjugated diene and an aromatic vinyl compound may be terminated with a terminating agent compound having a protected primary amino group and an alkoxysilyl group, as described, for example, in U.S. Pub. No. 20040254301 A1. Another SBR functionalized with an alkoxysilane group and a thiol is described in U.S. Pub. No. 20080287601 A1.

Suitable styrene-butadiene rubbers functionalized with an alkoxysilane group and a primary amine group are available commercially, such as HPR 340 from Japan Synthetic Rubber (JSR).

Suitable styrene-butadiene rubbers functionalized with an alkoxysilane group and a thiol group are available commercially, such as Sprintan SLR 3402 from Trinseo.

Polybutadiene rubbers which may be employed as the third elastomer may be prepared, for example, by organic solution polymerization of 1,3-butadiene. The PBD may be characterized, for example, by having at least a 90 % cis-1,4-microstructure content ("high cis" content), or at least 95 %, or at least 96 % cis-1,4-microstructure. The glass transition temperature (Tg), determined according to ASTM D3418, of the PBD may range from -95 to - 112 °C. The PBD may have a Mooney viscosity, determined according to ASTM D1646, of 45-65 M.U.

Suitable polybutadiene rubbers are available commercially, such as Budene^{®} 1207, Budene^{®} 1208, Budene^{®} 1223, and Budene^{®} 1280 from The Goodyear Tire & Rubber Company. These high cis-1,4-polybutadiene rubbers can be synthesized utilizing nickel or neodymium catalyst systems, such as those which include a mixture of (1) an organonickel compound, (2) an organoaluminum compound, and (3) a fluorine containing compound, as described, for example, in U.S. Pat. Nos. 5,698,643 and 5,451,646. For example, Budene^{®} 1207, which is nickel catalyzed, has a cis 1,4-content of at least 96 %, a Mooney viscosity of 55, and a Tg of -100 °C to -104 °C, and Budene^{®} 1223, which is neodymium catalyzed, has a cis 1,4-content of at least 96 %, a Mooney viscosity of 55, and a Tg of about -104 °C.

The PBD, where used, may be present in the rubber composition in an amount of at least 10 phr, or at least 15 phr, or at least 20 phr, or up to 50 phr, or up to 40 phr, or up to 35 phr. In other embodiments, PBD is omitted.

### (iv) Other Elastomers

Other vulcanizable elastomers may be present in the rubber composition (e.g., totaling up to 20 phr, or up to 10 phr, or up to 5 phr, or up to 2 phr, or up to 1 phr). Examples of such other elastomers include halobutyl rubber, e.g., bromobutyl rubber and chlorobutyl rubber, nitrile rubber, polynorbornene copolymer, ethylene-propylene-diene rubber, chloroprene rubber, acrylate rubber, fluorine rubber, silicone rubber, polysulfide rubber, epichlorohydrin rubber, butyl rubber, a terpolymer formed from ethylene monomers, propylene monomers, and/or ethylene propylene diene monomer (EPDM), isoprene-based block copolymers, styrenic block copolymers, styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C4-C10 alpha-olefin monomers, polypropylene polymers, maleated polyolefins, polyester copolymers, copolyester polymers, ethylene acrylic acid copolymer, and/or polyvinyl acetate. Such polymers optionally include a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

### B. Particulate Fillers

In addition to the particulate filler provided by the composite blend, an additional amount (such as at least 5 phr, or at least 10 phr, or at least 20 phr, or at least 40 phr, or up to 100 phr, or up to 60 phr) of one or more particulate reinforcing fillers is used in forming the rubber composition. Examples of such particulate fillers include carbon black and silica. The additional fillers may be added in sufficient amount to provide the rubber composition with a total particulate filler of at least 40 phr, or at least 50 phr, or at least 60 phr, or up to 120 phr, or up to 100 phr, or up to 80 phr of particulate fillers.

### (i) Carbon Black

Carbon black may be present in the rubber composition in a total amount of at least 10 phr, or at least 15 phr, or at least 20 phr, or at least 30 phr, or at least 40 phr, or at least 50 phr, or at least 60 phr, or up to 90 phr, or up to 80 phr, or up to 75 phr, or up to 70 phr. A ratio of the carbon black present in the composite blend to additional carbon black added separately may be at least 1:3, or at least 1:2, or at least 1:1.5, or up to 3:1, or up to 2:1, or up to 1.5:1, or up to 1.2:1.

Exemplary carbon blacks have a specific surface area of at least 8, or at least 20, or at least 100, or at least 120, or up to 200 m2/kg, or up to 132 m2/kg, as determined according to ASTM D6556-21, "Standard Test Method for Carbon Black - Total and External Surface Area by Nitrogen Adsorption." The specific (external) surface area, which is based on the statistical thickness method (STSA), is defined as the specific surface area that is accessible to rubber. Example carbon blacks include furnace black, channel blacks, and lamp blacks. Specific examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments, the rubber composition includes a mixture of two or more of the carbon blacks.

Exemplary carbon blacks useful herein as the additional carbon black include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions, as determined according to ASTM D1510-21, ranging from 9 to 145 g/kg and a DBP absorption number, as determined according to ASTM D2414, ranging from 34 to 150 cm3/100 g. For example, N121 grade is a granular carbon black with an Iodine Absorption of about 121 g/kg, a CATB specific surface area of about 121 m2/kg, a DBP absorption of about 132 m2/kg, and an ash content of less than 0.5 wt. %. N220 grade is a granular carbon black with an Iodine Absorption of 116-126 g/kg, a CATB specific surface area of 106-116 m2/kg, a DBP absorption of 109-119 m2/kg, and an ash content of less than 0.5 wt. %.

### (ii) Silica

In some embodiments, the rubber composition may include at least 2 phr of silica, or at least 4 phr, or at least 5 phr, or up to 110 phr, or up to 60 phr, or up to 40 phr, or up to 15 phr, or up to 12 phr of silica. The silica may be at least 1 phf, or at least 5 phf, or at least 8 phf, or up to 40 phf, or up to 20 phf, or up to 12 phf of the reinforcing fillers. In other embodiments, silica is absent from the rubber composition.

When used with carbon black, silica can minimize carbon black loading while lowering hysteresis and increasing tear resistance.

The silica may be amorphous (e.g., precipitated) silica and/or crystalline silica. The term "silica" is used herein to refer to silicon dioxide, SiO2 (which may contain minor amounts of impurities, generally less than 1 wt. %, resulting from the process in which the silica is formed). The term "precipitated silica" is used to refer to synthetic amorphous silica, typically obtained by a process in which a silicate is precipitated with an acidifying agent.

The silica may be prepared by various methods. Precipitated silica may be prepared by digesting amorphous silica, e.g., found in rice husks or other biological wastes, with sodium hydroxide to form sodium silicate and precipitating silica from the sodium silicate by reaction with an acidifying agent, such as sulfuric acid or carbon dioxide. The resulting silica precipitate is washed and filtered. Methods for the preparation of precipitated silica are disclosed, for example, in U.S. Pat. No. 5,587,416 A and U.S. Pub. Nos. 20020081247 A1; 20050032965 A1; and 20110178227 A1. Precipitated silica may also be formed from silica gel as described, for example, in U.S. Pat. No. 5,708,069. Silica gels may be derived, for example, by hydrophobating a silica hydrogel with, for example, an organomercaptosilane and alkyl silane and drying the product.

The surface area of silica can be measured in various ways. One method is through nitrogen adsorption in accordance with ASTM D1993-18, "Standard Test Method for Precipitated Silica-Surface Area by Multipoint BET Nitrogen Adsorption," which is referred to herein as nitrogen surface area. Another method is in accordance ASTM D6845-20, "Standard Test Method for Silica, Precipitated, Hydrated-CTAB (Cetyltrimethylammonium Bromide) Surface Area," which is referred to herein as CTAB surface area. The CTAB molecule is relatively large; so it is not adsorbed in micropores or on surface roughness. Thus, the CTAB surface area reflects only the surface of the silica that is available for interaction with rubber molecules.

In an exemplary embodiment, the silica has a CTAB surface area of at least 140 m2/g, or at least 160 m2/g, or at least 200 m2/g, or at least 220 m2/g, or up to 350 m2/g, or up to 300 m2/g.

An exemplary high surface area silica is available as Zeosil^{™} Premium SW from Solvay. This silica has a CTAB surface area of about 250 m2/g. Other precipitated silicas include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR from Solvay; Ultrasil^{™}, under the designations VN2, VN3, VN3GR, 5000GR, 7000GR, 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

The silica may have been surface treated, e.g., with an organosilane coupling agent and/or a polyalkylene oxide, such as polyethylene glycol, prior to incorporating the pretreated silica into the rubber composition to enhance dispersion and/or adherence to the elastomers. In another embodiment, the silica may be treated with the coupling agent and/or polyalkylene oxide in situ, within the rubber composition, e.g., prior to addition of the curing agent.

Coupling agents generally include a first moiety that is reactive with hydroxyl groups (e.g., silanol groups) that are present on the surface of precipitated silica and a second moiety capable of reacting with a diene-based elastomer. The two moieties are connected by a linking group, e.g., a hydrocarbyl and/or sulfidic bridge, such that the precipitated silica is chemically bonded to the elastomer. Organosilanes are commonly-used coupling agents.

Other particulate reinforcing fillers which may additionally or alternatively incorporated in the rubber com include alumina, aluminum hydroxide, clay (reinforcing grades), magnesium hydroxide, boron nitride, aluminum nitride, titanium dioxide, and combinations thereof.

### C. Processing Aids

The rubber composition may include processing aids, such as liquid plasticizers, waxes, resins, and mixtures thereof.

The term liquid plasticizer is used to refer to plasticizer ingredients which are liquid at room temperature (i.e., liquid at 25°C and above) and as distinguished from hydrocarbon resins, which are generally solid at room temperature. Generally, liquid plasticizers have a Tg that is below 0°C, generally well below, such as less than -30°C, or less than -40°C, or less than -50°C, such as a Tg of 0°C to -100°C.

Suitable liquid plasticizers include both oils (e.g., petroleum oils as well as plant-sourced oils) and other non-oil liquid plasticizers, such as ether plasticizers, ester plasticizers, phosphate plasticizers, and sulfonate plasticizers. Liquid plasticizer may be added during one or more of the stages, such as NP1, NP2 or as an extender oil for one of the elastomers. Petroleum based oils may include aromatic oils, naphthenic oils, low polycyclic aromatic (PCA) oils, such as MES, TDAE, and SRAE, and mixtures thereof. Plant oils may include oils harvested from vegetables, nuts, seeds, and mixtures thereof, such as triglycerides.

Liquid plasticizers may be used in the rubber composition at from 0 to 30 phr, or at least 0.5 phr, or at least 1 phr, or at least 2 phr, or up to 10 phr, or up to 5 phr.

Suitable waxes include paraffin waxes and microcrystalline waxes, which may be of the type described in The Vanderbilt Rubber Handbook (1978), pp. 346 and 347. Such waxes can serve as antiozonants.

The wax(es), where used, may be present at 0.1 phr or more, such as at least 0.2 phr, or at least 0.5 phr, or up to 5 phr, or up to 3 phr, or up to 2 phr.

Resin may be used at from 0-10 phr, or at least 0.1 phr, or at least 0.5 phr, or up to 5 phr. When the rubber composition includes one or more resins, the resin(s) may be selected from a hydrocarbon traction resin, a natural resin, such as rosin, a tackifying resin, such as unreactive phenol formaldehyde, a stiffness resin, such as a reactive phenol formaldehyde resin, and combinations thereof.

Examples of hydrocarbon traction resins which may be used include those with a glass transition temperature Tg which is greater than 20° C, or at least 30°C, or up to 50°C, as determined according to ASTM D6604. The traction resin may have a softening point of at least 30°C, or at least 70° C, or up to 100°C, as determined according to ASTM E28. The Tg is generally lower than its softening point, and the lower the Tg the lower the softening point. The hydrocarbon traction may be selected from terpene-phenol resins, terpene resins, terpene-styrene resins, styrene/alpha-methylstyrene resins, coumarone-indene resins, polydicyclopentadiene (DCPD) resins, DCPD/C9 resins, hydrogenated DCPD resins (H2DCPD), H2DCPD/C9 resins, C5 resins, C9 resins, H2C5 resins, H2C9 resins, C5/C9 resins, rosin derived resins, and copolymers and mixtures thereof (H2 indicates that the resin is hydrogenated, C5 and C9 indicate the number of carbon atoms, prior to any functionalization, in the monomers from which the resins are formed). Such resins may be partially or fully hydrogenated and/or functionalized. Exemplary hydrocarbon-based traction resins are described in U.S. Pub. No. 20210032442 A1. Resins are also described in U.S. Pub. No. 20210355301A1.

Resins may also be derived from naturally-occurring rosins and derivatives thereof, including, for example, gum rosin, wood rosin, and tall oil rosin. Gum rosin, wood rosin, and tall oil rosin have similar compositions, although the amount of components of the rosins may vary. Such resins may be dimerized, polymerized or disproportionated. Such resins may be in the form of esters of rosin acids and polyols such as pentaerythritol or glycol. In one embodiment, the rubber composition includes 1-4 phr of rosin.

### D. Cure Activators

Cure activators are additives which are used to support vulcanization. Cure activators include both (i) inorganic cure activators and (ii) organic cure activators. Zinc oxide is the most widely used inorganic cure activator and may be present in an amount of at least 1 phr, such as at least 2 phr, or up to 7 phr or up to 5 phr.

Organic cure activators include fatty acids, such as stearic acid, palmitic acid, lauric acid, and mixtures thereof, calcium and zinc salts of unsaturated fatty acids, amides of unsaturated fatty acids, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

In one embodiment, a mixture of fatty acids, which is predominantly stearic acid, is used as the organic activator.

The total amount of organic cure activator(s) may be at least 0.1 phr, such as at least 0.5 phr, or at least 1 phr, or at least 2 phr, or up to 6 phr, or up to 5 phr, or up to 3 phr.

### E. Cure Accelerators

Cure accelerators, like activators, act as catalysts for the vulcanization agent. Accelerators are used to control the time and/or temperature required for vulcanization and also to improve the properties of the vulcanizate, such as through crosslinking and may be used singly or in combination. The total amount of the cure accelerator(s) may be from 0.1 to 10 phr, or at least 0.3 phr, or at least 0.5 phr, or up to 3 phr.

In one embodiment, a single accelerator system may be used, i.e., primary accelerator. A primary accelerator may be used in amounts ranging from 0.3 to 5 phr, or up to 2 phr. In another embodiment, combinations of two or more accelerators may be used. The secondary accelerator is generally used in smaller amounts, in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide, such as N-cyclohexyl benzothiazole-2-sulfenamide (CBS) or N-tert-butyl-2-benzothiazole-sulfenamide (TBBS). If a second accelerator is used, the secondary accelerator may be a guanidine such as N,N'-diphenyl guanidine (DPG), a dithiocarbamate or a thiuram compound, although a second sulfenamide accelerator may be used. Examples of thiazole cure accelerators include 2-mercaptobenzothiazole, 2,2'-dithiobis(benzothiazole) (MBTS).

Cure accelerators having a fast cure initiation time, typically less than 3 minutes, are referred to as ultra-accelerators. Example ultra-accelerators which may be used alone or in combination with other accelerators include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc dibenzyl dithiocarbamate (ZBED), zinc dibenzyldithiocarbamate (ZBEC), and mixtures thereof.

Free radical initiators, which may be used in some embodiments, are sometimes known as redox initiators, and include combinations of chelated iron salts, sodium formaldehyde sulfoxylate, and organic hydroperoxides. Representative organic hydroperoxides include cumene hydroperoxide, p-menthane hydroperoxide, and tertiary butyl hydroperoxide. The free radical initiator may be used in combination with, or as an alternative to, a sulfur-based vulcanizing agent.

The amount of free radical initiator, where used, may be 0.1 to 4 phr, or 0.5 to 2 phr. In other embodiments, free radical initiators are absent from the rubber composition.

Cure inhibitors are used to control the vulcanization process and generally retard or inhibit vulcanization until the desired time and/or temperature is reached. Example cure inhibitors include cyclohexylthiophthalimide. The amount of cure inhibitor, if used, may be 0.1 to 3 phr, or 0.5 to 2 phr. In one embodiment, no cure inhibitor is used.

The amount of cure retardant, if used, may be 0.05 to 2 phr, or at least 0.1 phr, or up to 1 phr, or up to 0.5 phr. In one embodiment, no cure retardants are used.

The rubber composition may include 0.1 to 15 phr of an organosilane coupling agent, e.g., at least 1 phr, or up to 5 phr. The amount of organosilane coupling agent may be based on the amount of silica in the composition, such as 1-10 phf.

Examples of organosilane coupling agents include those containing groups such as alkyl alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof.

Examples of alkyl alkoxysilanes suitable for use include octyltriethoxysilane, octyltrimethoxysilane, trimethylethoxysilane, cyclohexyltriethoxysilane, octadecyl-trimethoxysilane, methyloctyl dimethoxysilane, and mixtures thereof.

Examples of bis(trialkoxysilylorgano)polysulfides suitable for use include 3,3'-bis(triethoxysilylpropyl) disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethylmethoxysilylethyl)disulfide, 3,3'-bis(diphenylcyclohexoxysilylpropyl)disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, bis(3-triethoxysilylpropyl)tetrasulfide, bis(2-triethoxysilylethyl)tetrasulfide, bis(3-trimethoxysilylpropyl)tetrasulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof. Bis(3-triethoxysilylpropyl)tetrasulfide is available as Si69^{®} from Evonik Corporation and bis-(3-triethoxysilylpropyl)disulfide with an average of 2.15 connecting sulfur atoms in the polysulfidic bridge, available as Si266^{®} from Evonik Corporation. One example of a suitable blocked mercapto silane is NXT^{™} silane (3-octanoylthio-1-propyltriethoxysilane), commercially available from Momentive Performance Materials Inc., Albany, N.Y.

### F. Sulfur-based curing agent

The vulcanization (curing) of the rubber composition is conducted in the presence of a curing (vulcanizing) agent, such as a sulfur-based curing agent. Examples of suitable sulfur-based curing agents include elemental sulfur (free sulfur), insoluble polymeric sulfur, soluble sulfur, and sulfur donating curing agents, for example, an amine disulfide, polymeric polysulfide, or sulfur olefin adduct, and mixtures thereof.

Sulfur-based curing agents may be used in an amount (expressed as pure sulfur) of at least 0.1 phr, such as at least 0.2 phr, or at least 0.4 phr, or at least 0.5 phr, or up to 2 phr, or up to 1.5 phr, or up to 1 phr. By using a sulfur-donating accelerator, the amount of sulfur-based curing agent can be minimized.

### G. Antioxidants, Antidegradants Antiozonants, and Other Additives

Various compounds may be incorporated in the rubber composition which help to reduce oxidation, ozone degradation, and other forms of degradation. In total these compounds may be present in the rubber composition at 1 phr or more, such as at least 2 phr, or at least 2.5 phr, or up to 6 phr, or up to 5 phr. In other embodiments, they may be absent.

Exemplary antidegradants suited to use in the rubber composition include amine based antioxidants, such as paraphenylenediamines (PPDs) including alkyl-aryl paraphenylene diamines, e.g., N-(1,3-dimethylbutyl)-N'-phenyl-p-phenylenediamine (6PPD), paraphenylenediamines such as N,N'-diphenyl-1,4-phenylenediamine (DPPD), and trimethyl-dihydroquinoline (TMQ) antidegradants and others, such as those disclosed in The Vanderbilt Rubber Handbook (1978), pages 344-347.

In addition to the above ingredients, the rubber composition may include other rubber compounding ingredients, such as a peptizer, such as pentachlorothiophenol, dibenzamidodiphenyl disulfide, or a mixture thereof. Typical amounts of peptizer, if used, may be 0.1 phr to 1 phr.

In one embodiment, components of the rubber composition other than the first, second, and third elastomers, carbon black, silica, activators, accelerators, cure retardants, plasticizing agents, antiozonants, and sulfur based curing agents, are present at no more than 20 phr of the rubber composition, or no more than 10 phr, or no more than 5 phr of the rubber composition.

In one embodiment, a tire is provided, the tire having a tread which is formed, at least in part, from the exemplary rubber composition. Other parts of the tire, such as the tire sidewalls, may additionally, or alternatively, be formed, at least in part, from a rubber composition as described herein. The tire may be a pneumatic tire for an on-the-road vehicle, such as a bus or truck, or an automobile, or a tire for an off-road vehicle, airplane or the like.

The rubber composition is not limited to use in tires but may find application in rubber hoses, rubber gloves, surgical instruments, and the like.

### Example Compositions

Table 1 illustrates exemplary rubber compositions in accordance with aspects of the exemplary embodiment.

**Table 1: Example Rubber Compositions (phr)**

| Component | Example 1 | Example 2 |
|---|---|---|
| Polydiene rubber, e.g., SBR | 5-40 | 10 - 30 |
| Natural rubber in composite blend | 20 - 80 | 40 - 70 |
| Polyisoprene rubber, e.g., natural rubber, other than in composite blend | 10 - 60 | 15 - 40 |
| Carbon black, total | 10 - 90 | 40 - 70 |
| Silica | 0- 110 | 4-40 |
| Liquid processing aids, such as processing oil and/or extender oil | 0-20 | 2-40 |
| Wax, e.g., paraffin wax and/or microcrystalline wax | 0.2 - 3 | 0.5-2 |
| Resin, e.g., hydrocarbon resin and/or rosin | 0-20 | 1-10 |
| Antidegradants, antiozonants, and antioxidants | 0-6 | 1-5 |
| Organic cure activator, e.g., a mixture of fatty acid and/or fatty acid soaps | 0.5 - 6 | 1 - 5 |
| Inorganic cure activator, e.g., Zinc Oxide | 1-7 | 2-5 |
| Accelerator(s) | 0.2 - 3 | 0.3 - 2 |
| Sulfur-based curing agent, e.g., elemental sulfur | 0.3 - 2 | 0.5 - 1.5 |

### Tire Tread Properties

The use of the rubber composition in tires, such as tire treads, may result in a tire having improved or desirable tread properties. These improved or desirable properties may include improved mileage while retaining other properties.

Without intending to limit the scope of the exemplary embodiment, the following examples illustrate preparation of the exemplary rubber compositions and properties thereof.

### EXAMPLES

Rubber compositions are prepared using the formulation shown in Table 2. Each composition is mixed in four stages, all but the last of which are non-productive (NP) and the final stage is productive (PR). In the first stage, the mixture is dropped when it reaches 165 °C, the second stage at 160°C, the third stage at 155 °C, and the final, productive stage at 110 °C. The formulations are mixed in a laboratory mixer. Curing of the compositions is carried out at a temperature of 135°C for 140 minutes.

Example A uses a mixture of natural rubber (NR) and ESBR as the elastomers, in a ratio of NR:ESBR of 15:85. Examples B, C, and D all use a composite blend corresponding to 60 phr natural rubber and 33 phr carbon black. In Example B, the composite blend is diluted with an additional 21.82 phr of natural rubber, and subsequently diluted with 18.18 phr of ESBR, providing an NR:ESBR ratio 81.82:18.18. In Example C, the composite blend is diluted only with natural rubber, and in Example D, only with ESBR, giving an NR:ESBR ratio of 60:40. The amount of carbon black used in composition A is 60 phr, and for Examples B to D (not including that used as a support for the coupling agent) is similar, at 66 phr. However, the distribution of the particulate fillers, in particular, carbon black, in the elastomers differs due to the sequential mixing, creating a multiphase mixture. For example, in Example B, mixing the composite material with natural rubber and carbon black in NP1 results in two natural rubber phases, with different ratios, by weight, of carbon black:elastomer (the CB:E ratio being higher in the natural rubber phase resulting from the composite blend than in the natural rubber added in NP1). The subsequent addition of the ESBR in NP2 results in three phases, all with different CB:E ratios, where the ESBR phase has the lowest CB:E ratio (lowest proportion of carbon black) and the natural rubber from the composite blend has the highest CB:E ratio. NP3 is an additional mixing step, without incorporation of further components, and could be omitted.

**TABLE 2: Rubber Compositions (expressed as phr)**

| Component | Ex. A | Ex. B | Ex. C | Ex. D |
|---|---|---|---|---|
| NP1 | | | | |
| ESBR 1 | 85 | | | 40 |
| Composite blend 2 | - | 93 | 93 | 93 |
| Natural Rubber 3 | - | 21.82 | - | - |
| Natural Rubber 4 | 15 | | 40 | |
| Carbon Black 5 | 50 | 36 | 36 | 36 |
| Silica 6 | - | 7.5 | 7.5 | 7.5 |
| Hydrocarbon resins 7 | 10 | | | |
| Modified gum rosin 8 | 5 | 2 | 2 | 2 |
| Paraffin Wax 9 | 1.0 | 1.0 | 1.0 | 1.0 |
| Antiozonant and antioxidant 10 | - | 2.75 | 2.75 | 2.75 |
| Zinc oxide | 3 | 4 | 4 | 4 |
| Processing aid 11 | - | 4 | 4 | 4 |
| Fatty acid activator 12 | 1 | 2.5 | 2.5 | 2.5 |
| NP1 Total | 170 | 174.57 | 192.75 | 192.75 |

| NP2 | | | | |
|---|---|---|---|---|
| ESBR 1 | - | 18.18 | - | - |
| Carbon Black 5 | 10 | - | - | - |
| Antiozonant and antioxidant 10 | 3 | - | - | - |
| NP2 Total | 183 | 192.75 | 192.75 | 192.75 |
| NP3 total | 183 | 192.75 | 192.75 | 192.75 |

| PR | | | | |
|---|---|---|---|---|
| Sulfur | 0.94 | 0.94 | 0.94 | 0.94 |
| Accelerator 13 | 1.42 | 0.5 | 0.5 | 0.5 |
| Accelerator 14 | 1.2 | - | - | - |
| Cure retardant 15 | - | 0.1 | 0.1 | 0.1 |
| Coupling agent supported on carbon black 16 | - | 1.5 | 1.5 | 1.5 |
| Total Parts | 186.56 | 195.79 | 195.79 | 195.79 |
| Total Natural Rubber | 15 | 81.82 | 100 | 60 |
| Total ESBR | 85 | 18.18 | 0 | 40 |
| Total Carbon Black | 60 | 66 | 66 | 66 |
| Specific Gravity | 1.152 | 1.186 | 1.183 | 1.19 |

| | | | | |
|---|---|---|---|---|
| ¹ Tin catalyzed, emulsion polymerized styrene butadiene copolymer, 23.5% bound styrene containing some antioxidant. It contains a mixed acid emulsifier and is salt-acid coagulated. PLIOFLEX^{®} 1502 from The Goodyear Tire & Rubber Company. ² Composite blend obtained from Cabot as E2C^{™} DX9730, composed of natural rubber and 55 phr of carbon black, i.e., 93 phr of the composite blend is equivalent to 60 phr natural rubber and 33 phr carbon black. ³ Ribbed Smoked Sheets (RSS). ³Technically Specified Rubber (TSR). ⁵ Carbon Black ASTM D 1765 grade N220, obtained from Tokai Carbon. ⁶ Precipitated silica with nitrogen (BET) surface area in a range of about 250 m2/g, Zeosil^{®} Premium SW, from Solvay. ⁷ Petroleum-based hydrocarbon resin and a mixture of alkylated and aromatic hydrocarbon resins. ⁸ Modified gum rosin tackifying resin, with a softening point of 97°C, obtained as R-224 from Resinall Corp. ⁹Paraffin Wax. ¹⁰ N-(1,3-dimethylbutyl)-N'-phenyl-p-phenylenediamine (6PPD). ¹¹ Obtained as SureMix^{®} S6, CO2 from Flow Polymers, Polymer Solutions Group. ¹² Mixture of fatty acids, predominantly stearic acid. ¹³ TBBS (n-tert-butyl-benzothiazolesulfenamide). ¹⁴ N,N'-diphenyl guanidine (DPG). ¹⁵ N-(cyclohexylthio) phthalimide (optional) ¹⁶ Bis-[3-(triethoxysilyl)propyl] Tetrasulfide (TESPT) obtained as Si69^{®} from Evonik, supported on 50% carbon black ASTM grade N347 from Tokai Carbon. | | | | |

Properties of the Rubber Compositions:
Physical tests were performed on samples of the rubber compositions. The results are shown in TABLE 3.

**TABLE 3: Physical Properties of the Rubber Compositions**

| | Units | Ex. A | Ex. B | Ex. C | Ex. D |
|---|---|---|---|---|---|
| RPA G' at 1% strain, 100°C, 1Hz | MPa | 2.506 | 3.67 | 3.964 | 3.566 |
| RPA G' at 10% strain, 100°C, 1Hz | MPa | 1.226 | 1.53 | 1.542 | 1.537 |
| RPA G' at 100% strain, 100°C, 1Hz | MPa | 0.612 | 0.718 | 0.682 | 0.715 |
| RPA Tan Delta at 10% strain | | 0.253 | 0.23 | 0.243 | 0.242 |
| TE at 100% Modulus | MPa | 2.097 | 2.423 | 2.413 | 2.593 |
| Tensile Strength | MPa | 20.417 | 22.693 | 23.137 | 21.427 |
| Elongation at Break | % | 670.333 | 540.33 | 529.33 | 545 |
| Instron Tear | N/cm | 74.016 | 112.06 | 97.701 | 91.264 |
| Rebound at 100°C | % | 41 | 45 | 45 | 45 |
| Abrasion | Mg/km | 472.386 | 530.4 | 621.59 | 491.2 |
| Strebler Tear | N/mm | 30.2 | 23.06 | 38.10 | 33.71 |
| Modulus of Toughness | N*mm | 1091.796 | 620.11 | 594.62 | 573.37 |

RPA results for the storage modulus G' and G" are determined by a Rubber Process Analyzer (RPA), at 100°C and 1Hz, using a Dynamic Cure Cycle. Tan Delta is the ratio of G" to G'. RPA Tan Delta at 10% strain is indicative of the extent of heat build-up in a tire (lower is better).

Tensile properties (Tensile Elongation (TE) at 100% Modulus, Tensile Strength, Elongation at Break, Instron Tear, and Rebound at 100°C) are determined with an Automated Testing System instrument by the Instron Corporation after curing for 140 min at 135 °C. The TE and Tensile Strength tests are performed at 23 °C, at a pulling speed of 50 cm/min, using a dumbbell-shaped sample. Instron Tear is determined at 95°C at a pulling speed of 50.8 cm/min (higher values are better). Rebound is determined at 100°C, by the Zwick rebound test, and is indicative of rolling resistance, leading to heat build-up in a tire.

Abrasion, indicative of tread wear, is determined as the Grosch abrasion rate in terms of mg/km of rubber abraded away. The test rubber sample is placed at a given slip angle constant load (70 Newtons) as it traverses a given distance on a rotating abrasive disk. Lower abrasion values (mg/km), at the given slip angle, indicate higher expected mileage.

### Modulus of toughness is the area under the stress strain curve

Strebler tear is determined at 100°C, after curing for 140 min at 135 °C and aging for 7 days at 90°C. The tests are performed at a pulling speed of 50 cm/min. This is a peel test which determines interfacial adhesion by pulling one rubber composition away from the other at a right angle to the untorn test specimen with the two ends of the rubber compositions being pulled apart at a 180° angle to each other. A higher value is an indicator of composition robustness.

As can be seen from the data, the samples of the vulcanizable rubber composition of Example B (in which the composite blend is diluted with natural rubber and ESBR) performed better, overall, than the comparative Example A samples, and also better than samples with all NR or all ESBR as the diluting elastomer (Examples C and D). In particular the RPA Tan Delta at 10% strain, Instron Tear, and Abrasion results show that the inventive Example B has a good blend of properties. Rebound properties for Examples B, C, and D are comparable.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent, diluent oil, or other carrier material, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A method of forming a vulcanizable rubber composition, the method comprising:
in a first non-productive mixing step, mixing a composite blend with a first elastomer to generate a first mixture, the composite blend comprising a second elastomer and carbon black, the second elastomer being the same as or different from the first elastomer;
in a second non-productive mixing step, mixing a third elastomer, different from the first elastomer, with the first mixture, or with a mixture generated from the first mixture, to generate a second mixture; and
in a productive mixing step, mixing a curing agent with the second mixture, or with a mixture generated from the second mixture, to generate the vulcanizable rubber composition comprising the first, second, and third elastomers, carbon black from the composite blend, and an additional amount of a reinforcing filler.

2. The method of claim 1, wherein the first elastomer comprises a first one of a natural rubber and a polydiene elastomer and the third elastomer comprises a second one of the natural rubber and the polydiene elastomer.

3. The method of claim 1 or 2, wherein the first elastomer comprises the natural rubber and the third elastomer comprises the polydiene elastomer, and, optionally, wherein the polydiene elastomer comprises a styrene-butadiene rubber such as an emulsion-polymerized styrene-butadiene rubber.

4. The method of at least one of the previous claims, wherein a ratio by weight of the first elastomer to the third elastomer in the vulcanizable rubber composition is at least 1:10, or at least 1:5, or at least 1:2, or at least 1:1.5, or at least 1:1, or up to 10:1, or up to 5:1, or up to 3:1, or up to 2:1, or up to 1.5:1.

5. The method of at least one of the previous claims, wherein the first and third elastomers are present in the vulcanizable rubber composition in a total amount of at least 20 phr, or at least 30 phr, or up to 70 phr, or up to 60 phr, or up to 50 phr, or up to 40 phr.

6. The method of at least one of the previous claims, wherein the second elastomer comprises a natural rubber.

7. The method of at least one of the previous claims, wherein the composite blend comprises carbon black in an amount of at least 40 phr per 100 phr of the second elastomer.

8. The method of at least one of the previous claims, wherein the reinforcing filler comprises carbon black in an amount of at least 10 phr, or at least 20 phr per 100 phr of the second elastomer; and/or wherein the reinforcing filler further comprises silica in an amount of at least 5 phr.

9. The method of at least one of the previous claims, wherein the vulcanizable rubber composition further comprises at least one of a processing aid, a cure activator, and a cure accelerator.

10. The method of at least one of the previous claims, wherein the method comprises:
in the first non-productive mixing step, mixing together a composite blend, a natural rubber and carbon black, to generate a first mixture, the composite blend comprising natural rubber and carbon black;
in the second non-productive mixing step, mixing a styrene-butadiene rubber with the first mixture, or with a mixture derived from the first mixture, to generate a second mixture comprising 100 phr of elastomers comprising at least 45 phr of natural rubber and at least 10 phr of styrene-butadiene rubber, at least 40 phr carbon black, at least 5 phr of silica; and
in the productive mixing step, mixing a curing agent with the second mixture or with a mixture generated from the second mixture, to generate the vulcanizable rubber composition.

11. A vulcanizable rubber composition comprising 100 phr of elastomers, the elastomers comprising:
at least 5 phr of a first elastomer,
at least 20 phr of a second elastomer, provided in the form of a composite blend with carbon black, and
at least 5 phr of a third elastomer, the third elastomer being different from the first elastomer in its chemical composition;
at least 5 phr of a particulate filler, in addition to the carbon black in the composite blend, the particulate filler being selected from the group consisting of carbon black, silica, and combinations thereof;
a cure activator;
a cure accelerator; and
a sulfur-based curing agent.

12. The vulcanizable rubber composition of claim 11, wherein the vulcanizable rubber composition includes multiple phases, comprising a first phase the first phase comprising the first elastomer, a second phase comprising the second elastomer, and a third phase comprising the third elastomer, wherein a concentration of carbon black in the third phase is lower than in the first phase.

13. The vulcanizable rubber composition of claim 11 or 12, further comprising a processing aid selected from the group consisting of a resin, a liquid processing aid, a wax, and combinations thereof.

14. A tire tread comprising the vulcanizable rubber composition of at least one of the claims 11 to 13 and/or comprising the vulcanizable rubber composition formed by the method of at least one of the previous claims 1 to 10.

15. A tire comprising the tire tread of claim 14 in the form of a vulcanized tire tread.
